# NEW EUROPEAN PATENT SPECIFICATION

(11) **EP 2 235 578 B2**
(45) Date of publication and mention of the opposition decision: **13.09.2023**
(45) Mention of the grant of the patent: 03.06.2020
(21) Application number: 08867252.2
(22) Date of filing: 29.12.2008
(51) Int. Cl.: G02B 21/36, G01N 1/28, G01N 21/00, G01B 9/04, G01B 11/00, G02B 21/32

(54) **SYSTEM, DEVICE, AND METHOD FOR LASER CAPTURE MICRODISSECTION**
SYSTEM, EINRICHTUNG UND VERFAHREN ZUR LASERERFASSUNGS-MIKRODISSEKTION
SYSTÈME, DISPOSITIF ET PROCÉDÉ DE MICRODISSECTION LASER

(30) Priority: 28.12.2007 US 17353
(43) Date of publication of application: 06.10.2010
(73) Proprietor: Carl Zeiss Microscopy GmbH, 07745 Jena (DE)
(72) Inventor: BLOOM, Kenneth, J., 07745 Jena (DE); ZEINEH, Jack, A., Fullerton, CA 92831 (US); LESNIAK, Andrew, J., Sewickley, PA 15143 (US)
(74) Representative: Patentanwälte Geyer, Fehners & Partner mbB
(86) International application number: PCT/US2008/088451
(87) International publication number: WO 2009/086521

(56) References cited:
- EP-A1- 1 367 380
- WO-A1-00/07131
- WO-A2-2004/025569
- US-A1- 2002 001 074
- US-A1- 2004 085 443
- US-A1- 2004 093 166
- US-A1- 2005 182 321
- US-A1- 2006 114 456
- US-A1- 2007 066 967
- US-A1- 2007 066 967
- US-A1- 2007 160 280
- Espina Virginia et al: "Laser-capture microdissection", Nature Protocols, vol. 1, no. 2, 1 August 2006 (2006-08-01), pages 586-603,
- Mccullough Bruce et al: "Digital Microscopy Imaging and New Approaches in Toxicologic Pathology", TOXICOLOGIC PATHOLOGY, vol. 32, no. 2_suppl, 1 February 2004 (2004-02-01), pages 49-58,
- "Leica LMD6000 Laser Mikrodissection System", Instructions, October 2006 (2006-10), pages 1-46,
- "Leica LMD6000 Laser Mikrodissection System Software Version 6.3", Leica Microsystems, pages 1-68,
- "Leica LMD6000 Laser Mikrodissection System Upgrade modules", , pages 1-25,
- "Leica Image Manager", The Professional Image Management System, 2002,
- Information Document "Remote support tool. SYS-remote", Business Unit Communication- Leica. Microsystems. 07.02.05
- Instruction Manual SYS Remote
- Servicekonzept LMD6000
- 'Region of interest', Wikipedia 25.10.07
- 'Control of a Remote Microscope over the Internet', R. Maturo et al, Bio Techniques vol.22, p.1154-1157, June 1997

## Description

The invention relates generally to microdissection. More particularly, the invention relates to a system and method for designating and capturing targets of interest for microdissection according to the preamble of claim 1 or 3.

Laser Capture Microdissection ("LCMD") is a technology for isolating individual cells or specific cells of interest from microscopic regions of a sample. One method of performing LCMD is to apply a transfer film to the surface of a tissue section. Under a microscope, the thin tissue section is viewed through a glass slide on which it is mounted and individual cells or clusters of cells are identified for isolation. When the isolated cells are in the field of view, the microscope operator actives a near IR laser diode integral with the microscope optics. The pulsed laser beam activates a precise spot on the transfer film, fusing the film with the underlying isolated cells. The transfer film with the bonded cells is then lifted off the thin tissue section, leaving the other, non-isolated cells on the glass slide.

LCMD can be performed on a variety of tissue samples including blood smears, cytologic preparations, cell cultures, aliquots of solid tissues, and frozen and paraffin embedded archival tissues. These individual cells can then be analyzed using a variety of techniques to analyze their various constituents by such techniques as Polymerase Chain Reaction ("PCR"), immunoassays, microarrays, or the like. This has proven valuable in research by enabling very precise molecular assays to be performed without compromising the ability to target particular cells. Further, because LCMD does not alter or damage the morphology and chemistry of the sample collected, nor the surrounding cells, LCMD is a useful method of collecting selected cells for DNA, RNA, and protein analyses.

A LCMD system according to the preamble of claim 1 is known from US 2007/0066967 A1 or WO 2004/025569 A2.

However, the process of identifying cells can be very tedious requiring an individual to sit at the microscope and manually identify each cell. If multiple people want to use the system, they have to each schedule time on the unit. Furthermore, the individual performing LCMD must be trained in the identification of the cells of interest. This can make higher volume applications much less practical and much more expensive, as well as creating a constraint on experts whose time and location limitations might not be amenable to such a workflow.

There remains a need for a system that allows identification of the specified cells of interest to be performed independently from the LCMD process.

The invention is defined by claim 1 and 3. Embodiments of the present invention resolve many of the above-described deficiencies and drawbacks, and are directed to a system and method for obtaining samples from a laser capture microdissection system. A slide, such as a glass slide, containing a tissue or the like sample can be scanned to create a digital slide. The digital slide can then be annotated by a user, such as an expert in cell identification. The coordinates of the annotations can then be subject to a transformation, such that the designated area is laser dissected out on a laser capture microdissection device, independently and discretely from the cell identification process.

In an embodiment of the invention, the digital slide having a first annotation representing an area of interest is compared to an image produced by the laser capture microdissection unit having a second annotation representing a portion of the biological sample before LCMD is performed. The image comparison is done via side-by-side comparison or transparent overlay. The first and second annotations are initially registered based on the coordinate transformation. The first and second annotations can then be precisely registered by either movement of the second annotation or movement of the image produced by the laser capture microdissection unit until the portion of biological sample represented by the second annotation substantially corresponds to the area of interest previously selected on the digital slide.

The above summary of the invention is not intended to describe each illustrated embodiment or every implementation of the present invention. The figures and the detailed description that follow more particularly exemplify these embodiments.

### BRIEF DESCRIPTION OF THE DRAWINGS

FIG. 1 is a flow diagram of a method of utilizing a digital slide to identify regions of interest according to an embodiment.
FIG. 2 is a block diagram of a laser capture microdissection system according to an embodiment of the invention.
FIG. 3 is a schematic of a microscope imaging system according to an embodiment of the invention.
FIG. 4 is a front view of a microscope of the microscope imaging system of FIG. 3.
FIG. 5a is a screen shot of a side-by-side comparison of an initial registration of the digital slide and the LCMD unit field of view.
FIG. 5b is a screen shot of the side-by- side comparison of FIG. 5a after moving the annotation on the LCMD unit field of view.
FIG. 6a is a screen shot of a side-by-side comparison of an initial registration of the digital slide and the LCMD unit field of view.
FIG. 6b is a screen shot of the side-by-side comparison of FIG. 6a after moving the image on the LCMD unit.

### DETAILED DESCRIPTION OF THE DRAWINGS

Embodiments of the present disclosure provide a mechanism to utilize a digital slide to identify regions of interest. The glass slide corresponding to the digital slide can be placed on a LCMD unit. Coordinates for areas of interest identified on the digital slide can be subject to a transformation matrix that translates coordinates on the digital slide to coordinates on the glass slide on the LCMD unit. The LCMD unit can then dissect out the desired areas.

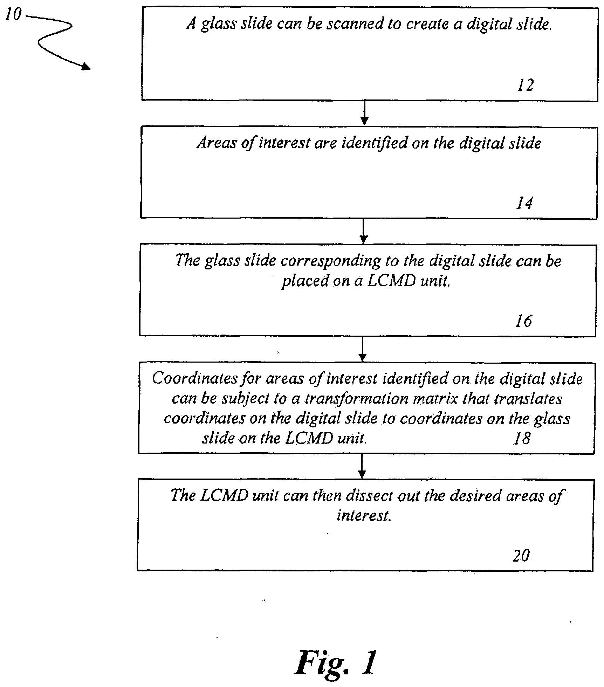

FIG. 1 illustrates a flow diagram 10 of an LCMD method, utilizing a digital slide. At 12, a glass slide is scanned to create a digital slide. The digital slide is stored remotely in a database on a remote server. The digital slide is then analyzed at 14 to identify cells of interest for further analysis. The analysis is done not on the same microscope system, but remotely. At 14, areas of interest are identified on the digital slide and optionally annotated. In one embodiment of the invention, cell identification 14 is performed manually by a pathologist, lab technician, or other such individual trained in the identification of cells. In another embodiment of the invention, cell identification 14 is performed automatically, as discussed in US 6215892 B1 entitled "Method and Apparatus for Automated Image Analysis of Biological Specimens".

To perform LCMD, the glass slide corresponding to the digital slide is placed on a stage of the LCMD unit at 16. At 18, the coordinates of the identified areas of interest are then subject to a transformation matrix, transforming the coordinates of the digital slide, i.e. pixel information, to the corresponding coordinates, i.e. X-Y coordinates, on the stage of the LCMD unit. At 20, the LCMD unit is activated by an individual that is the same as or separate from the individual who performed the cell identification to dissect out the desired areas or cells of interest.

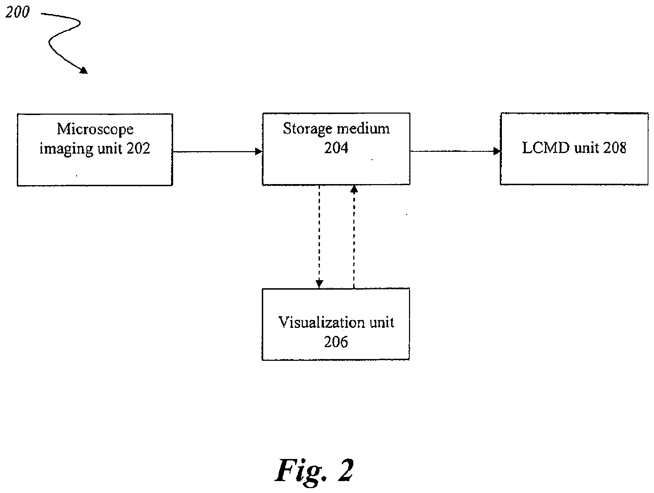

FIG. 2 illustrates a laser capture microdissection system 200, according to embodiments of the present invention, including a microscope imaging unit 202, a storage medium 204 such as a database, a visualization unit 206, and an LCMD unit 208. Microscope imaging unit 202 and LCMD unit 208 can be one in the same unit, i.e. a microscope comprising both a scanning feature and an LCMD feature, or separate and distinct units. Storage medium 204 comprises a remote server that is networked to microscope imaging unit 202, visualization unit 206, and LCMD unit 208, such that visualization unit 206 is positioned remotely from microscope imaging unit 202 and LCMD unit 208, and can be used to access and view the image data stored in storage medium 204.

Each unit of system 200 is described in more detail below.

### Microscope imaging unit

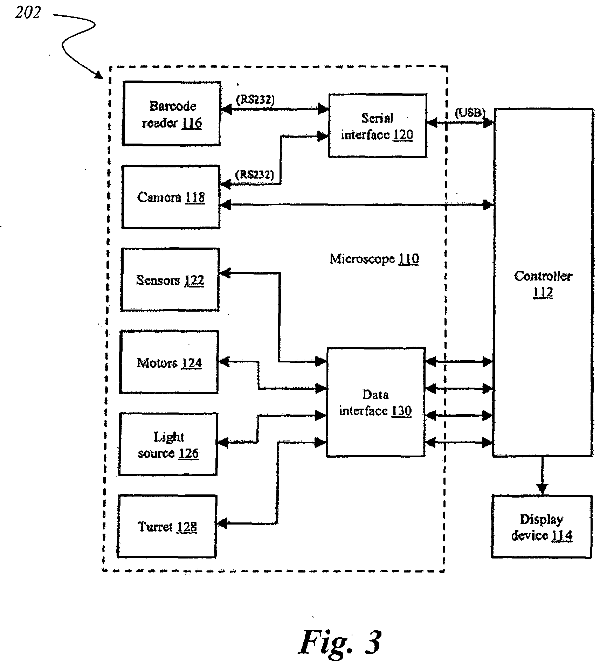

FIG. 3 illustrates an exemplary high-level functional diagram of a microscope imaging unit 202, according to an embodiment of the invention. Microscope imaging unit 202 includes a microscope 110 electrically connected to a controller 112 having a display device 114. Controller 112 in FIG. 3 can be any special-purpose or conventional computer, such as a desktop, laptop, or host computer. Controller 112 is loaded with the appropriate software for controlling microscope imaging unit 202, such as software for running image-processing algorithms, LCMD algorithms, and/or image analysis algorithms. Display device 114 can be any special-purpose or conventional computer display device that outputs graphical images to a user. Microscope 110 can further include a barcode reader 116, a camera 118, a serial interface 120, one or more sensors 122, one or more motors 124, a light source 126, a turret 128, and a data interface 130.

Camera 118 can be a digital camera having selectable resolution capabilities. Furthermore, camera 118 can comprise any type of device suitable for gathering an image. Camera 118 is mounted upon a turret 128 of microscope 110 such that an aperture of camera 118 is aligned with the field of view (FOV) of any lens associated with turret 128. Camera 118 is electrically coupled to a serial interface such that they can feed electrical inputs to a serial interface 120, which facilitates a serial communication link between camera 118 and controller 112. In an embodiment of the invention, serial interface 120 provides a USB connection to controller 1 12. It should be appreciated that camera 1 18 can be communicatively coupled to controller 112 in other manners.

Controller 112 can include one or more components for facilitating its functions. In an embodiment, controller includes a video card 112. Camera 118 provides a direct video output to the video card within controller 112. The video card gathers the image data from camera 118 for processing in a well-known manner.

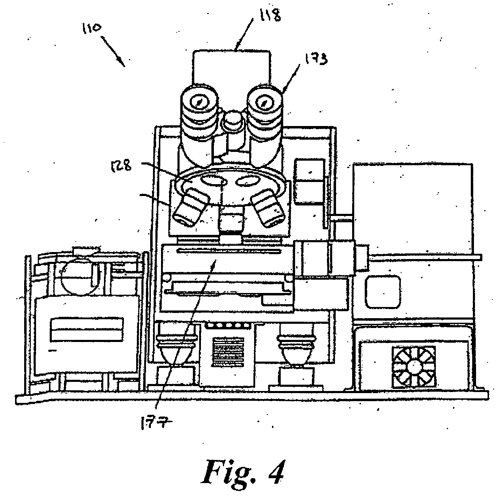

The sensors can include one or more sensors for sensing various aspects of microscope imaging unit 202. For example, sensors 122 include, but are not limited to, position sensors, temperature sensors, and light intensity sensors or optical encoders. Motors 124 can be any type of motors for providing motion to the microscope or any portion of the microscope. In an embodiment, motors 124 are conventional servomotors associated with the motion control of microscope 110, such as those for rotating the appropriately powered lens within the optical path of microscope 110, for adjusting focus, or for controlling an automated X, Y stage (shown in FIG. 4).

Light source 126 can be any suitable light source for appropriately illuminating the FOV of microscope 110 sufficient to create a digital image of that FOV. Turret 128 is a conventional motor-driven microscope turret upon which is mounted a set of lenses of varying power that may be rotated into the optical path of microscope 110. Turret 128 is also suitably controlled to provide the desired focus. Sensors 122, motors 124, light source 126, and turret 128 feed to the electrical inputs of data interface 130. Data interface 130 can be a conventional system driver card, which facilitates a data communication link between these elements and a motion control card within controller 112.

FIG. 4 shows a front view of an exemplary microscope 110 of microscope imaging unit 202. A set of viewing oculars 173 of microscope 110 are optionally located on microscope 110 for operator viewing. As mentioned, microscope 110 further includes a camera 118 for acquiring images. Illumination light source 126 in FIG. 4 projects light onto X-Y stage 177, which is subsequently imaged through microscope 110 and acquired through CCD camera 118 for processing in an image processor. A Z stage or focus stage 179 under control of microscope controller 112 provides displacement in the Z plane for focusing. Microscope 110 further includes motorized objective turret 128 for selection of objectives. In one embodiment of the invention, microscope 110 comprises a LCMD unit, such as a near IR laser diode integral with the microscope optics, such that microscope imaging unit 202 and LCMD unit 208 comprise a single piece of equipment.

### Digital Slide Area Designation

Referring back to FIG. 1, at 12, a glass slide is scanned to create a digital slide. In particular, a standard microscope slide having at least one biological sample deposited thereon and optionally stained with one or more chromogenic dyes is positioned on automated X-Y stage 177 of microscope 110, depicted in FIG. 4.

Once the slide is positioned in the FOV of microscope 110, an image scan operation is performed wherein the slide can be scanned at one or more resolutions and magnifications based upon image-processing algorithms and image analysis algorithms executed by controller 112. Examples of such image acquisition can be found in US 2006/0002636 A1 entitled "Data Structure of an Image Storage and Retrieval System" and US 2005/0089208 A1 entitled "System and Method for Generating Digital Images of a Microscope Slide". Upon completion of the image scan operation, the slide image data for that particular slide is transmitted to controller 112 and stored in storage medium 204, i.e. in a database on a remotely available server such that remote users networked to the server can access the slide image data.

It should be appreciated that microscope imaging unit 202 can be configured to operate autonomously. That is, a clinician can initiate microscope imaging unit 202 such that microscope imaging unit 202 thereafter operates automatically without the need for human intervention as long as a supply of microscope slides is available at its in-feed stage and no system errors occur. Alternately, the clinician and/or the controller can manually feed slides into the microscope imaging system.

The digital slide is a digital representation of the slide image data of all or substantially all of a sample on a glass slide that was captured during scanning. In one embodiment, the slide image data is digitized such that mechanical stage coordinates of the captured area(s) are represented. This coordinate information can be stored inside the image data file (.TIFF or JPG) or can be a separate file for example located in storage medium 204 on the database. Other methods of storing positional information are also possible. This provides sufficient information such that a particular pixel coordinate on a digital slide can be converted to mechanical stage, i.e. real world x-y coordinates. Other information may also be contained in storage medium 204, such as, for example, varied patient and health care provider information, including, but not limited to, the patient's name, age, and address, and the physician's name and location of practice, slide identification such as barcode information, microscope identification, and any of a variety of information.

As mentioned above, storage medium 204 can also include coordinates with respect to a coordinate system, such as a Cartesian coordinate system comprised of x and y coordinates that are oriented relative to a reference point on the slide. The process of capturing and inserting these coordinates into storage medium 204 is referred to as the "registration" process. The registration process of these coordinates can occur after the image capture process is complete (referred to as "offline").

### Visualization unit and identification of areas of interest

Referring back to FIG. 1, after digitization of the slide at 12, a user such as a pathologist views the slide at 14 using visualization unit 206. Visualization unit 206 can include, for example, a computer with access to storage medium 204, such as a computer networked to remote database. The computer can have software installed thereon to access, view, and edit the image data stored in storage medium 204.

The user can access storage medium 204 remotely, and view the digital slide on any of a number of networked computers having a visualization unit 206. The user then identifies cells or areas of interest, using a selection tool. The corresponding digital coordinates describing this area of interest, such as pixel and/or rectangular coordinates, can then be stored to storage medium 204.

The digital slide can be annotated with a variety of drawing tools such as freehand drawing, text boxes, circle, rectangle, and polygon, and the like. The annotation data, such as the coordinates describing the annotation, are stored in the database, an xml file, and/or as metadata inside the digital slide file.

In yet another embodiment, visualization unit 206 can provide automated or semi-automated assistance to the user. For example, unit 206 can separate epithelium from stroma and auto-generate an annotation. This semi-automated or automated assistance is explained, for example, in previously referenced US 6215892 B1 entitled "Method and Apparatus for Automated Image Analysis of Biological Specimens." The user can then edit this annotation. Such edits can include change the shape of the annotation or alternatively drawing an exclusionary annotation the deletes a certain portion of the area in the annotation. For example, if the semi-automated system created a free hand drawing, the user can draw another free hand drawing. The area defined by this second freehand drawing is subtracted from the area of the first such that the overlap is eliminated from the first and only the non-overlapping area of the first is left.

### Coordinate Transform/Registration

Referring back to FIG. 1 at 18, in order to perform LCMD on the areas of interest identified in 16, the annotations generally must be converted to coordinates readable by LCMD unit 208. In some embodiments, LCMD unit 208 understands mechanical coordinates, such as Cartesian coordinates or rectangular coordinates, corresponding to its x-y stage system. A stage mapping calibration that would be performed periodically on microscope imaging unit 202, or the digital slide scanning system, and LCMD unit 208 provides the transformation information necessary to construct a transform matrix. This transform matrix can be combined with a digital slide pixel to scanner stage matrix in order to provide transformation of the annotation pixel coordinates to LCMD stage coordinates.

At the completion of the cell identification, system 200 transposes the positions into actual stage coordinates for the LCMD procedure. A program running on LCMD unit 208 controls the operation by communicating with a stage controller, similar to the stage controller of microscope imaging unit 202.

### LCMD

Before LCMD is performed, embodiments of the present disclosure can also include a step to perform a manual or dynamic, automated registration or alignment of the digital slide and the field of view of the LCMD using the transformed coordinates as a starting point. Because LCMD unit 208 typically has a camera on the unit, such as when microscope imaging unit 202 and LCMD unit 208 comprise the same unit, an image of the specified area on the glass slide can be captured before LCMD is performed. This image can then be compared to the original annotated area of the digital slide.

In one embodiment of the invention, the comparison is done automatically. This automatic comparison can be done by doing a normalized cross correlation. This comparison can be repeated using a sliding window of a predetermined amount to find the best match. Once the coordinates of the best match are determined, the stage coordinates for transfer can then be adjusted. Stage coordinates describing the area to be captured can be optionally padded by a predetermined amount in order to compensate for any mechanical inaccuracies that can be in the system. Such padding can be different in each axis to reflect the potentially different accuracies of each axis.

In another embodiment of the invention, the comparison is done manually by the LCMD operator. The manual registration of the digital slide can be accomplished via a side-by-side comparison of the digital slide and LCMD unit field of view, a transparent overlay comparison, or a combination of both. Registration of the images using either the side-by-side and overlay techniques, such as transparent overlay, can be accomplished by a user interface and a user input device, such as a mouse, joystick, keyboard, and the like, which allows an operator to adjust any of a variety of parameters on the LCMD unit field of view including movement, sizing, and/or scaling of the annotation, movement of the image, adjustment of scale or magnification of the image, and any combination thereof. The movement of the annotation, image, or both can include x-y translation, as well as rotational movement.

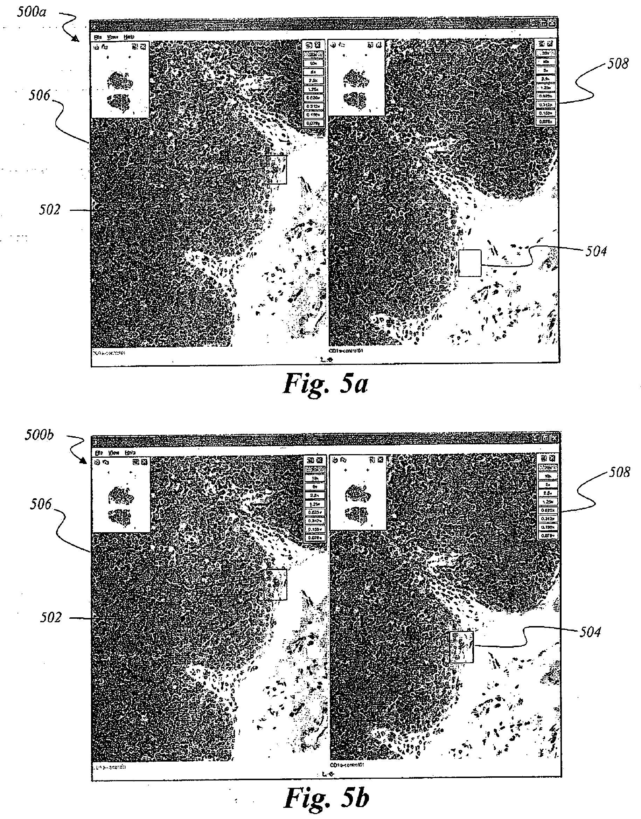

According to one embodiment of the invention, FIGS. 5a and 5b represent an example of manual registration 500 using a side-by-side comparison technique in which the annotation, i.e. the boxed area in this case, can be moved. FIG. 5a illustrates a side-by- side screen shot 500a of an initial registration of digital slide image 506 having annotation 502 and LCMD unit image 508 having annotation 504. As apparent in FIG. 5a, the initial registration of annotation 502 and 504 is poor, and does not represent the same or similar selected area of interest. The user, through a user interface, moves and/or sizes annotation 504 to improve the registration, as illustrated in FIG. 5b in screen shot 500b, such that the selected areas of interest are the same or similar in both images 506 and 508. Movement of annotation 504 can include x-y translation as well as rotational movement.

In another embodiment of the invention, the scale of the annotation can be adjusted. If the initial scale of the annotation of the LCMD unit image is different from the scale of the annotation of the digital slide, the user can adjust the scale of the annotation using a user input device, such as a mouse, until the scale of the two views are substantially similar.

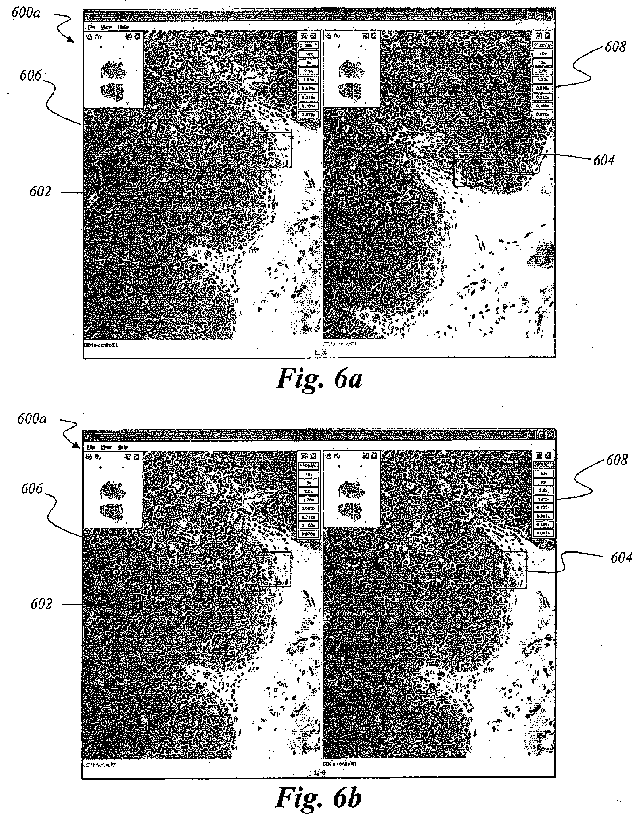

According to an alternative embodiment of the invention, FIGS. 6a and 6b represent an example of manual registration 600 using a side-by-side comparison technique in which LCMD unit image 608 can be moved to register annotations 602 and 604. FIG. 6a illustrates a side-by-side screen shot 600a of an initial registration of digital slide image 606 having annotation 602 and LCMD unit image 608 having annotation 604. As apparent in FIG. 6a, the initial registration of annotation 602 and 604 is poor, and does not represent the same or similar selected area of interest. The user, through a user interface, moves LCMD unit image 608 to improve the registration, as illustrated in FIG. 5b in screen shot 600b, such that the selected areas of interest are the same or similar in both images 606 and 608. Movement of LCMD unit image 608 can include x-y translation as well as rotational movement. In addition, the scale or magnification of LCMD unit image 608 can be made smaller or larger such that LCMD unit image 608 is approximately the same magnification of digital slide image 606.

In another embodiment of the invention, the scale between the digital slide and the LCMD unit image can be automatically adjusted such that it is not dependent upon the user's manual adjustment. This automatic scale adjustment can be accomplished via a distance/pixel calibration, for example. The scale of the one or both of the digital slide and the LCMD unit image can be adjusted so that one screen pixel corresponds to the same distance, such as a µm distance, in both images. This automatic scale adjustment can be incorporated in the registration system in which the annotation is moved or adjusted and the registration system in which the LCMD unit image is moved or adjusted.

Referring back to FIG. 1 at 20, when the isolated cells are in the field of view, and the user is satisfied with the annotation registration and scale, the microscope operator activates LCMD unit 208. LCMD unit 208 can comprise, for example, a near IR laser diode integral with the microscope optics. The pulsed laser beam activates a precise spot on the transfer film, fusing the film with the underlying isolated cells. The transfer film with the bonded cells is then lifted off the thin tissue section, leaving the other, non-isolated cells on the glass slide. The isolated cells can then be analyzed as discussed in the Background section.

The microscope operator activating LCMD unit 208 need not be an expert in the area of cell identification, and can be a lab technician as compared to a pathologist. Therefore, the system and method of the present invention does not constrain an expert, such as a pathologist, to an LCMD unit for long periods of time. Rather, the pathologist or expert can identify areas of interest at their leisure, and at any location in which they have editing and selecting access to storage medium 204 and the digital slide image data.

The embodiments above are intended to be illustrative and not limiting.

## Claims

1. A system for designating and capturing targets of interest on a slide having a biological sample contained thereon, the system (200) comprising:
a microscope imaging unit (202) including a microscope (110) having a stage (177) for positioning the slide thereon, and an image capturing apparatus (118), wherein the image capturing apparatus (118) generates a digital image representation of at least a portion of the biological sample;
a visualization unit (206) including a computer having a display screen, the computer having a selection tool installed thereon, the selection tool being adapted to enable a user to select at least one area of interest from the digital image representation;
a laser capture microdissection unit (208) adapted to dissect a portion from the biological sample, and
a storage medium (204) comprising a remote server that is networked to the microscope imaging unit (202), the visualization unit (206) and the laser capture microdissection unit (208), **characterized in that**
the microscope imaging unit (202) stores the digital image representation in a database on the remote server,
the visualization unit (206) is remote and separate from the microscope imaging unit (202) and the laser capture microdissection unit (208) and is usable to access and view the digital image representation stored in the database, wherein a first set of coordinates is generated and stored in the database on the remote server by the visualization unit (206) upon selection of the at least one area of interest, and wherein the first set of coordinates is transformed to a second set of coordinates corresponding to positions on the slide and readable by the laser capture microdissection unit (208) such that the dissected portion of the biological sample corresponds to the at least one area of interest selected from the digital image representation,
wherein an executable program configured for transforming the first set of coordinates to the second set of coordinates is stored on the remote server.

2. The system of claim 1, wherein the first set of coordinates describes the at least one area of interest and comprises pixel coordinates and/or rectangular coordinates, and wherein the second set of coordinates comprises Cartesian coordinates corresponding to positions on a stage of the laser capture microdissection unit (208).

3. A method for designating and capturing targets of interest on a slide having a biological sample contained thereon, the method comprising:
providing a slide having a biological sample thereon;
generating a digital image representation of at least a portion of the biological sample (12) by using a microscope imaging unit (202);
selecting at least one area of interest from the digital image representation (506,14) by using a visualization unit (206), thereby generating a first set of coordinates;
placing the slide having the biological sample thereon on a laser capture microdissection unit (208,16) and
dissecting a portion of the biological sample corresponding to the at least one area of interest selected from the digital image representation (20);
wherein the method is **characterized by**
providing the visualization unit (206) remote and separate from the microscope imaging unit (202) and the laser capture microdissection unit (208),
selecting the at least one area of interest comprises
storing the digital image representation to a remote server;
accessing remotely the digital image representation stored on the remote server;
viewing the digital image representation on the visualization unit (206) at a location remote from the microscope imaging unit (202) and the laser capture microdissection unit (208); and
storing the first set of coordinates to the remote server; and
transforming the first set of coordinates to a second set of coordinates by using an executable program configured for transforming the first set of coordinates to the second set of coordinates and stored on the remote server, wherein the second set of coordinates is readable by the laser capture microdissection unit (208,18).

4. The method of claim 3, wherein the first set of coordinates describes the at least one area of interest and comprises pixel coordinates and/or rectangular coordinates, and wherein the second set of coordinates comprises Cartesian coordinates corresponding to positions on a stage of the laser capture microdissection unit (208).

5. The method of claim 3, further comprising analyzing the dissected portion of the biological sample, in particular by using at least one technique selected from the group consisting of Polymerase Chain Reaction ("PCR"), immunoassays, microarrays, and combinations thereof.

## Patentansprüche

1. System zum Bestimmen und Erfassen von interessierenden Zielen auf einem Objektträger mit einer darauf befindlichen biologischen Probe, wobei das System (200) umfasst:
eine Mikroskopbildgebungseinheit (202), die ein Mikroskop (110) mit einem Objekttisch (177) zum darauf Positionieren des Objektträgers und eine Bilderfassungsvorrichtung (118) umfasst, wobei die Bilderfassungsvorrichtung (118) eine digitale Bilddarstellung von mindestens einem Abschnitt der biologischen Probe erzeugt;
eine Visualisierungseinheit (206), die einen Computer mit einem Anzeigebildschirm umfasst, wobei der Computer ein darauf installiertes Auswahlwerkzeug aufweist, wobei das Auswahlwerkzeug dazu angepasst ist, einem Benutzer zu ermöglichen, mindestens eine interessierende Fläche aus der digitalen Bilddarstellung auszuwählen;
eine Lasererfassungsmikrodissektionseinheit (208), die dazu angepasst ist, einen Abschnitt der biologischen Probe zu dissektieren, und
ein Speichermedium (204), das einen entfernten Server umfasst, der mit der Mikroskopbildgebungseinheit (202), der Visualisierungseinheit (206) und der Lasererfassungsmikrodissektionseinheit (208) vernetzt ist, **dadurch gekennzeichnet, dass**
die Mikroskopbildgebungseinheit (202) die digitale Bilddarstellung in einer Datenbank auf dem entfernten Server speichert,
die Visualisierungseinheit (206) von der Mikroskopbildgebungseinheit (202) und der Lasererfassungsmikrodissektionseinheit (208) entfernt und separat ist und verwendbar ist, um auf die in der Datenbank gespeicherte digitale Bilddarstellung zuzugreifen und sie anzusehen,
wobei ein erster Satz Koordinaten in der Datenbank auf dem entfernten Server von der Visualisierungseinheit (206) bei Auswahl der mindestens einen interessierenden Fläche erzeugt und gespeichert wird, und wobei der erste Satz Koordinaten in einen zweiten Satz Koordinaten transformiert wird, die Positionen auf dem Objektträger entsprechen und von der Lasererfassungsmikrodissektionseinheit (208) lesbar sind, sodass der dissektierte Abschnitt der biologischen Probe mindestens der einen interessierenden Fläche entspricht, die aus der digitalen Bilddarstellung ausgewählt wurde,
wobei ein ausführbares Programm, das zum Umwandeln des ersten Satzes Koordinaten in den zweiten Satz Koordinat konfiguriert ist, auf dem entfernten Server gespeichert ist.

2. System nach Anspruch 1, wobei der erste Satz Koordinaten die mindestens eine interessierende Fläche beschreibt und Pixelkoordinaten und/oder rechtwinklige Koordinaten umfasst, und wobei der zweite Satz Koordinaten kartesische Koordinaten umfasst, die Positionen auf einem Objekttisch der Lasererfassungsmikrodissektionseinheit (208) entsprechen.

3. Verfahren zum Bestimmen und Erfassen von interessierenden Zielen auf einem Objektträger mit einer darauf enthaltenen biologischen Probe, wobei das Verfahren umfasst:
Bereitstellen eines Objektträgers mit einer darauf befindlichen biologischen Probe;
Erzeugen einer digitalen Bilddarstellung von mindestens einem Abschnitt der biologischen Probe (12) mithilfe einer Mikroskopbildgebungseinheit (202);
Auswählen von mindestens einer interessierenden Fläche aus der digitalen Bilddarstellung (506, 14) mithilfe einer Visualisierungseinheit (206) und dadurch Erzeugen eines ersten Satzes Koordinaten;
Platzieren des Objektträgers mit der darauf befindlichen biologischen Probe auf einer Lasererfassungsmikrodissektionseinheit (208, 16) und
Dissektieren eines Abschnitts der biologischen Probe, die der mindestens einen interessierenden Fläche entspricht, die aus der digitalen Bilddarstellung (20) ausgewählt wurde;
wobei das Verfahren **gekennzeichnet ist durch**
Bereitstellen der Visualisierungseinheit (206), die von der Mikroskopbildgebungseinheit (202) und der Lasererfassungsmikrodissektionseinheit (208) entfernt und separat ist,
das Auswählen der mindestens einen interessierenden Fläche umfasst
das Speichern der digitalen Bilddarstellung auf einem entfernten Server umfasst;
Fernzugreifen auf die digitale Bilddarstellung, die auf dem entfernten Server gespeichert ist;
Ansehen der digitalen Bilddarstellung auf der Visualisierungseinheit (206) an einem Ort, der von der Mikroskopbildgebungseinheit (202) und der Lasererfassungsmikrodissektionseinheit (208) entfernt ist; und
Speichern des ersten Satzes Koordinaten auf dem entfernten Server; und
Transformieren des ersten Satzes Koordinaten in einen zweiten Satz Koordinaten unter Verwendung eines ausführbaren Programms, das zum Umwandeln des ersten Satzes Koordinaten in den zweiten Satz Koordinaten konfiguriert und auf dem entfernten Server gespeichert ist, wobei der zweite Satz Koordinaten von der Lasererfassungsmikrodissektionseinheit (208 18) lesbar ist.

4. Verfahren nach Anspruch 3, wobei der erste Satz Koordinaten die mindestens eine interessierende Fläche beschreibt und Pixelkoordinaten und/oder rechtwinklige Koordinaten umfasst, und wobei der zweite Satz Koordinaten kartesische Koordinaten umfasst, die Positionen auf einem Objekttisch der Lasererfassungsmikrodissektionseinheit (208) entsprechen.

5. Verfahren nach Anspruch 3, ferner umfassend das Analysieren des dissektierten Abschnitts der biologischen Probe, insbesondere mithilfe von mindestens einer Technik, die aus der Gruppe bestehend aus Polymerasekettenreaktion ("PCR"), Immunassays, Mikroassays und Kombinationen davon ausgewählt ist.

## Revendications

1. Système permettant de désigner et de capturer des cibles d'intérêt sur une lame sur laquelle est disposé un échantillon biologique, le système (200) comprenant :
une unité d'imagerie (202) à microscope comprenant un microscope (110) comportant un étage (177) pour positionner la lame sur celui-ci, et un appareil de capture d'image (118), l'appareil de capture d'image (118) générant une représentation d'image numérique d'au moins une partie de l'échantillon biologique ;
une unité de visualisation (206) comprenant un ordinateur possédant un écran d'affichage, l'ordinateur possédant un outil de sélection installé sur celui-ci, l'outil de sélection étant conçu pour permettre qu'un utilisateur sélectionne au moins une zone d'intérêt à partir de la représentation d'image numérique ;
une unité de microdissection à capture laser (208) conçue pour disséquer une partie de l'échantillon biologique, et
un support d'enregistrement (204) comprenant un serveur distant qui est en réseau avec l'unité d'imagerie (202) à microscope, l'unité de visualisation (206) et l'unité de microdissection à capture laser (208),
**caractérisé en ce que**
l'unité d'imagerie (202) à microscope mémorise la représentation d'image numérique dans une base de données sur le serveur distant,
l'unité de visualisation (206) est distante et distincte de l'unité d'imagerie (202) à microscope et de l'unité de microdissection à capture laser (208) et peut être utilisée pour accéder à la représentation d'image numérique mémorisée dans la base de données et pour visualiser celle-ci,
dans lequel un premier ensemble de coordonnées est généré et mémorisé dans la base de données sur le serveur distant par l'unité de visualisation (206) lors de la sélection de l'au moins une zone d'intérêt, et dans lequel le premier ensemble de coordonnées est transformé en un second ensemble de coordonnées correspondant à des positions sur la lame et lisible par l'unité de microdissection à capture laser (208) de sorte que la partie disséquée de l'échantillon biologique corresponde à l'au moins une zone d'intérêt sélectionnée à partir de la représentation d'image numérique
dans lequel un programme exécutable configuré pour transformer le premier ensemble de coordonnées en le second ensemble de coordonnées est stocké sur un serveur distant.

2. Système selon la revendication 1, dans lequel le premier ensemble de coordonnées décrit l'au moins une zone d'intérêt et comprend des coordonnées de pixels et/ou des coordonnées rectangulaires, et dans lequel le second ensemble de coordonnées comprend des coordonnées cartésiennes correspondant à des positions sur un étage de l'unité de microdissection à capture laser (208).

3. Procédé permettant de désigner et de capturer des cibles d'intérêt sur une lame sur laquelle est disposé un échantillon biologique, le procédé consistant à :
fournir une lame sur laquelle est disposé un échantillon biologique ;
générer une représentation d'image numérique d'au moins une partie de l'échantillon biologique (12) par l'utilisation d'une unité d'imagerie (202) à microscope ;
sélectionner au moins une zone d'intérêt à partir de la représentation d'image numérique (506, 14) par l'utilisation d'une unité de visualisation (206), ce qui génère un premier ensemble de coordonnées ;
placer la lame sur laquelle est disposé l'échantillon biologique sur une unité de microdissection à capture laser (208, 16) et
disséquer une partie de l'échantillon biologique correspondant à l'au moins une zone d'intérêt choisie à partir de la représentation d'image numérique (20) ;
le procédé étant **caractérisé par**
la fourniture de l'unité de visualisation (206) à distance et de façon distincte de l'unité d'imagerie (202) à microscope et de l'unité de microdissection à capture laser (208),
la sélection de l'au moins une zone d'intérêt consiste à
mémoriser la représentation d'image numérique sur un serveur distant ;
accéder à distance à la représentation d'image numérique mémorisée sur le serveur distant ;
visualiser la représentation d'image numérique sur l'unité de visualisation (206) au niveau d'un emplacement distant de l'unité d'imagerie (202) à microscope et de l'unité de microdissection à capture laser (208) ; et
mémoriser le premier ensemble de coordonnées sur le serveur distant ; et
transformer le premier ensemble de coordonnées en un second ensemble de coordonnées en utilisant un programme exécutable configuré pour transformer le premier ensemble de coordonnées en le second ensemble de coordonnées et stocké sur le serveur distant, le deuxième ensemble de coordonnées étant lisible par l'unité de microdissection à capture laser (208, 18).

4. Procédé selon la revendication 3, dans lequel le premier ensemble de coordonnées décrit l'au moins une zone d'intérêt et comprend des coordonnées de pixels et/ou des coordonnées rectangulaires, et dans lequel le second ensemble de coordonnées comprend des coordonnées cartésiennes correspondant à des positions sur un étage de l'unité de microdissection à capture laser (208).

5. Procédé selon la revendication 3, consistant en outre à analyser la partie disséquée de l'échantillon biologique, en particulier par l'utilisation d'au moins une technique choisie dans le groupe consistant en amplification en chaîne par polymérase (« ACP »), immunodosages, puces à ADN et des combinaisons de ceux-ci.
